# EUROPEAN PATENT SPECIFICATION

(11) **EP 4 212 602 B1**
(45) Date of publication and mention of the grant of the patent: **18.02.2026**
(21) Application number: 23150889.6
(22) Date of filing: 10.01.2023
(51) Int. Cl.: C10B 53/07, C08J 11/12, C10G 45/00, C10G 49/00, C10G 1/00, C10G 45/02, C10G 65/04, C10G 1/10

(54) **METHOD FOR DISPOSAL OF TYRES**
VERFAHREN ZUR ENTSORGUNG VON REIFEN
PROCÉDÉ D'ÉLIMINATION DE PNEUS

(30) Priority: 12.01.2022 IT 202200000365
(43) Date of publication of application: 19.07.2023
(73) Proprietor: Itelyum Regeneration S.p.A., 26854 Pieve Fissiraga (LO) (IT)
(72) Inventor: GALLO, Francesco, Pieve Fissiraga (LO) (IT)
(74) Representative: Vatti, Francesco Paolo

(56) References cited:
- WO-A1-2016/112371
- WO-A2-2013/119187
- DE-A1- 2 731 810
- US-A- 5 849 964

## Description

The present invention relates to a process for the disposal of tyres, in particular of end-of-life tyres (ELT), able to give value to this kind of waste.

Civilisation resulting from several industrial revolutions has led to an enormous mass of products, to a situation of widespread well-being simply unconceivable before, and to a higher distribution of prosperity on earth. Unfortunately, though, there are some downsides, first of all the huge production of waste, at all levels. Hence, problems relating to pollution -of air, water, and soil- have increased, along with those of contamination, mainly of water streams, and fields.

Production, which could be defined as frantic, has led to huge masses of waste to dispose of, which not always occurs in an environmentally respectful and, ultimately, healthy manner for everybody.

While in the past wastes were mainly burnt or abandoned, at first it was attempted to enclose them in so-called landfills, so to keep them all together in a single place, leaving then clean all areas outside the landfill. However, it was soon clear that this way of disposing of wastes still exhibits very serious disadvantages. In particular, in case of confinement of materials without separating them, being often of very different nature the one from the other, it occurred to have to deal with the formation of liquids coming from the reaction between various wastes, and sometimes weathering agents (typically rain and humidity). So, the so-called leachates are generated, which often end up penetrating in groundwater layers, in spite of the waterproofing works usually practiced in these contexts, creating great, and sometimes even very serious, pollution problems of the same. A remedy to this was waterproofing the bottom of the landfills with suitable layers, but this has contributed substantially to soil consumption, without -as mentioned above- achieving a complete solution of the problem.

It is also to bear in mind that waste burning and their confinement in landfills have the disadvantage that wastes are no longer available for possible additional uses and the result is having materials that are immobilised, in fact, wasted.

Concerning waste burning, in a first time it was practiced with any kind of waste and was carried out without particular precautions. In this way, though, the combustion was not always complete and could produce toxic smokes, reason why incinerators were considered by the population as something more and more harmful, therefore it became difficult to start new ones, due to the protests of the inhabitants of the areas chosen for the settlement of the same.

The higher environmental awareness that had been spreading through many sectors of the population worldwide, mainly in the first industrialised countries, mostly affected by the problem, modified the attitude towards wastes, which are considered increasingly less only as such, and increasingly more as a source of new uses.

Therefore, separate collection of wastes was started and pushed to very high levels, so that most of the wastes could be used as a source of new raw materials, such as paper, plastic, glass, metals. Waste burning, instead, was considered as a new energy source, so that so-called waste to energy plants were created, incinerators built in such a way to give a combustion as complete as possible, so to limit the production of toxic smokes as much as possible, and to use the heat produced either for domestic district heating in urban centres or as energy for the production of power, reducing then the consumption of other energy sources.

In this way, landfills are considerably decreasing their activity and limiting it to wastes difficult to recycle, such as certain special wastes.

Concerning waste to energy plants, one should keep in mind that, unfortunately, the energy produced is almost always lower than the energy that was necessary to obtain them, reason why the energy balance remains negative anyway, even though it allows a certain recovery and thus being the balance loss less negative than it was in the past.

Within the scope of reuse, the so-called circular economy is developing, which allows to use wastes as new raw materials, sometimes also with energy balances close to balance. This seems the future way of disposal, as soon as waste collection is properly organised, as today is not always at the top of the possible efficiency.

One of the most difficult wastes to dispose of is represented by end-of-use tyres, the waste containing them being commonly called ELT, an abbreviation for end-of-life tyres.

Combustion of ELT is one of the most classical examples of polluting combustion: more than 100 organic products were isolated from this combustion. Among these there are light hydrocarbons, monoaromatic compounds, polycyclic aromatic hydrocarbons, partially oxygenated organic compounds, dioxins, and others; among the others, tyres contain an average of about 1.5% of sulphur (due to their curing) and 0.4% of nitrogen, therefore the formation of sulphur oxides and nitrogen oxides, among the pollutants most desirably avoidable occurs. Thus, although in principle it is a quite efficient source of thermal energy (a calculation results in that burning 1 kg of tyres yields the same energy of 0,7 kg of aliphatic hydrocarbons), burning of tyres in an incinerator is not desired because of the high number of pollutants that would be produced, and also considering that some attempts of burning in cement plants have led to damage and consequent protests of the inhabitants of the areas surrounding the plants.

On the other hand, although there are many problems in connection with private mobility, this field is still very important and the increasingly stricter requirements of road safety, impose quite frequent tyre changes, reason why this type of waste is always present in abundant amounts, involving remarkable problems of disposal and dictating then an increase of the costs connected to their employment.

Processes of pyrolysis and de-curing, were recently started for tyre disposal and recycling.

Different processes have been developed for pyrolysis, with alternating fortune.

Bolder Industries has developed an electrically heated, screw pyrolysis reactor, dealing mainly with carbon black recovery, so much so to develop more than 2000 different recipes for this.

Enrestec has developed an indirectly gas heated, two screw stage, pyrolysis reactor, placed the one above the other, with a higher temperature in the higher reactor, where the pyrolysis reaction begins. Carbon black that is compliant with the European environmental standards is obtained.

New Energy has developed half-batch reactors, working alternating loading and unloading.

Reoil uses a classic reactor.

Pyrum uses a vertical reactor, 20 m high, with excellent pressure and temperature control.

WO 2016/112 371 discloses a process and a system for pyrolysis of rubber derived from tyres, to form fuel such as, for example, naphtha, kerosene, diesel n° 2 and fuel oil, as well as carbon black, powdered active carbon, sulphur and uncondensable gases.

US 5 84 9 964 discloses a process for the processing of plastic material wastes to recover raw materials for chemistry and fuel through depolymerisation operations, transforming wastes into a volatile phase and a pumpable one. The volatile phase is separated into a gaseous phase and a condensed or condensable part. The condensed or condensable part is finished by usual operations. Once the volatile part is separated, the remaining pumpable part is subjected to hydrogenation in a liquid phase, gasification, low temperature carbonisation or a combination of said processes.

WO 2013/119 187 discloses a method of thermal decomposition of organic materials, among which also tyres, under inert atmosphere in a hermetically closed apparatus. Solid, liquid and gaseous products result from this process.

In all cases, though, often the pyrolysis oil obtained from these processes cannot be used as such in possible, subsequent industrial processing, since it still contains otherwise polluting substances, among which rubber fines, and a process allowing to completely dispose of tyres would be desirable, obtaining, in addition to carbon black, another perfectly reusable product, without creating additional wastes.

Nowadays, there is a growing need of possible processes for improving the quality of pyrolysis oil, making its characteristics aligned, in a way to obtain a high value-added product, suitable for substituting fossil fuels currently used in some important industrial processes. The present invention belongs with full rights in this scope.

The problem the invention is based on is to provide a process for the disposal of end-of-life tyres (ELT), which overcomes said drawbacks, and allows a complete reuse without environmental problems of the obtained material. This object is reached through a process for the disposal of end-of-life tyres (ELT), including a pyrolysis step of the tyres themselves, wherein pyrolysis oil is obtained, wherein the pyrolysis oil is subjected, in a subsequent processing step, to a hydrorefining step, characterised in that the pyrolysis step is carried out in a first step, in a rotating oven, producing carbon black, a gas and a pyrolysis oil and in a second step, in a plug flow reactor which receives both gas and pyrolysis oil and performs a second operation that can be considered pyrolysis or cracking, working at a temperature between 350 and 600°C and in that the pyrolysis oil output from the pyrolysis reactor (4) feeds a regeneration plant for waste oils including a final hydrorefining step. Subclaims disclose preferable characteristics of the invention.

Further features and advantages of the invention are anyway better apparent from the following detailed description of a preferred embodiment, given only by exemplary and not limiting way and illustrated in the attached drawings, wherein:
fig. 1 that is a scheme of the process depicting the phases of the process according to an embodiment of the present invention;
fig. 2 is a scheme, analogous to that of fig. 1, of an alternative embodiment of the present invention;
fig. 3 is a scheme, analogous to the preceding two ones, of a second alternative embodiment of the present invention;
fig. 4 is a scheme, analogous to the preceding ones, depicting only a part of the plant according to the present invention, representing a preferred embodiment.

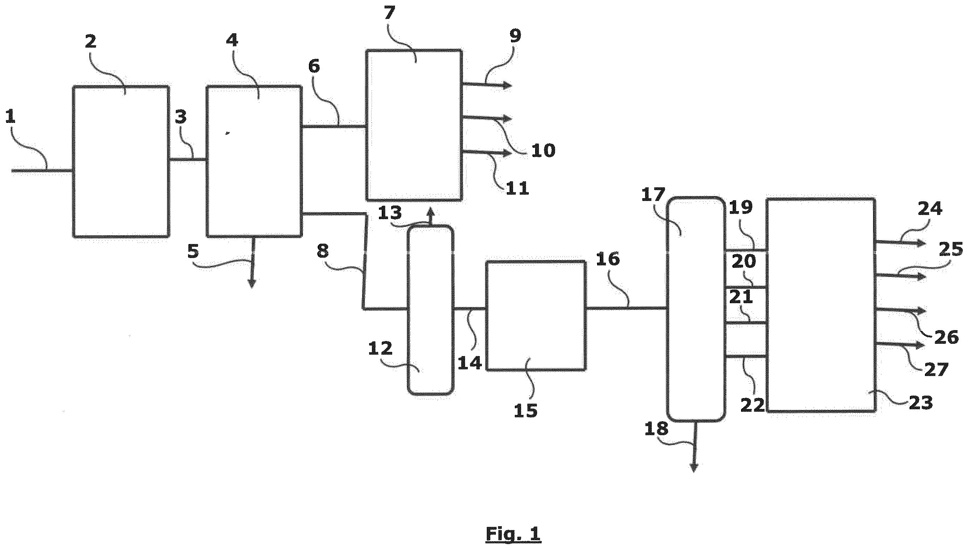

Based on the embodiment depicted in fig. 1, end-of-life tyres are fed to the process in 1; such feeding is represented in the drawing as a pipe, but given the nature of said feeding, it is more likely a hopper, a screw or any other transport device for random solid materials. Feeding 1 enters units 2 for pre-treatment, from which, in pipe 3, a material in the most suitable shape for subsequent operations is output. Pipe 3 feeds a pyrolysis section 4, from which three flows exit. Flow 5 carries powdered carbon black, as a marketable by-product. Flow 6 feeds a hydrorefining reactor 7 and flow 8 feeds a regeneration plant for waste oils. From reactor 7 some flows exit (three in the figure) 9, 10 and 11 with the end product.

Pipe 8 feeds a flash distillation column 12, from which two flows exit: one flow 13 with an aqueous phase and one 14 that is fed to a centrifugal separator 15. One flow 16 leaving the centrifugal separator 15 feeds a column for fractional distillation 17, from which flows 18 of bitumen (other marketable by-product), 19, 20, 21 and 22 are output, which are fed to a unit 23 for hydrorefining, from which the flows of products 24, 25, 26 and 27 are output.

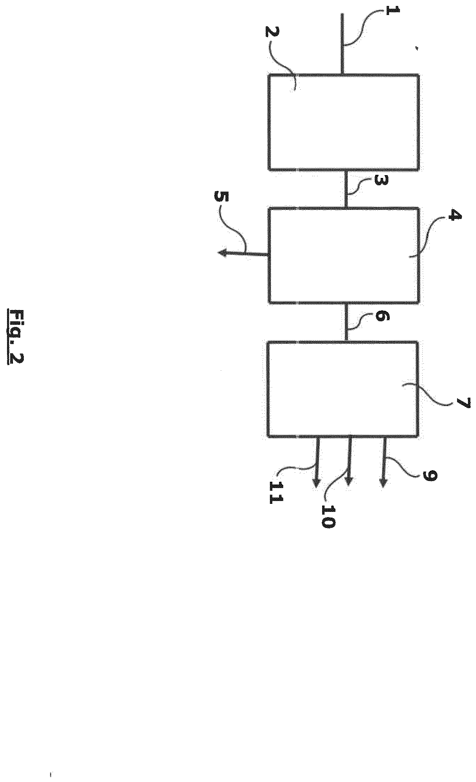

Based on the embodiment depicted in fig. 2, in 1 end-of-life tyres are fed to a pre-treatment unit 2, from which the material to be treated is output in a suitable form for subsequent processing, through pipe 3. Pipe 3, in turn, feeds a pyrolysis section 4, from which one product flow (powdered carbon black) 5 and one flow 6 feeding a hydrorefining reactor 7 are output. From reactor 7, flows 9, 10 and 11 of end product are output.

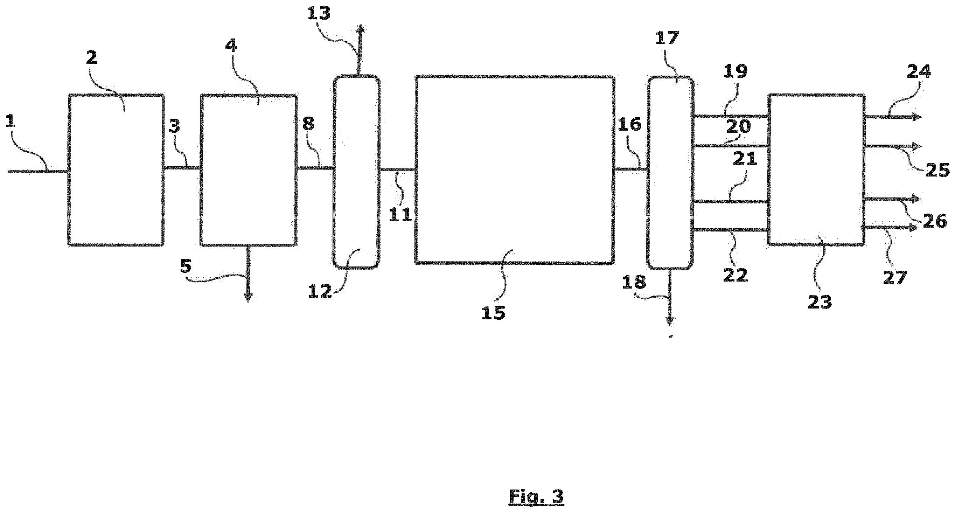

Examining the alternative embodiment of fig. 3, end-of-life tyres are fed through 1 to pre-treatment unit 2, from which the material to be treated is output, through pipe 3, in a suitable shape for subsequent processing.

Pipe 3 then feeds a pyrolysis section 4, from which one flow 5 with powdered carbon black, as a process by-product according to the present invention, and one flow 8 exit, feeding a flash distillation tower 12. From this, one flow of aqueous waste 13 and one flow 14 feeding a centrifugal separator, are output. The material to be treated exits through pipe 16 and feeds a fractional distillation tower 17. From this, in 18 the bitumen is output as a by-product, and from flows 19, 20, 21 and 22 the material to be further refined is output, which is fed into reactor 23 for hydrorefining, from which flows 24, 25, 26 and 27 with useful product are output.

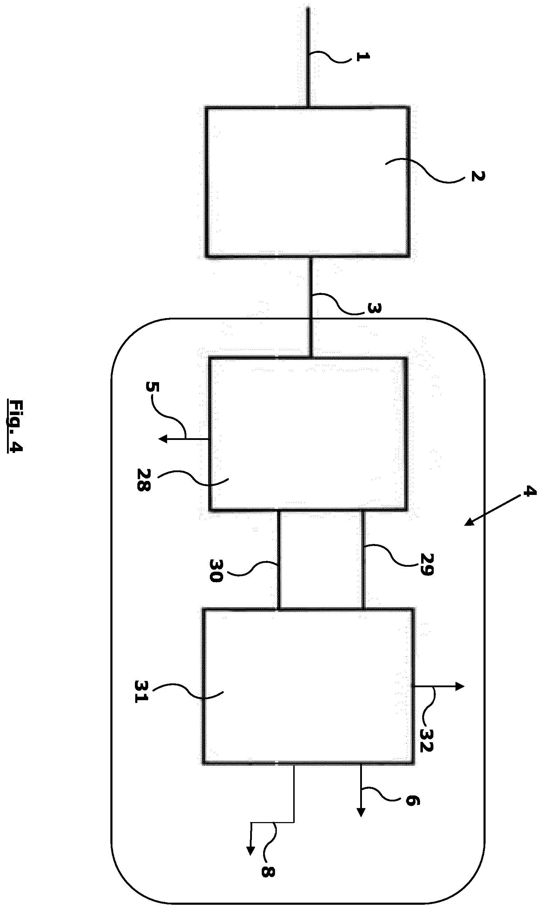

Examining fig. 4, section 4, placed in a plant configuration as in any one of previous figures, is divided into two parts. End-of-life tyres are fed through 1 to unit 2 for a pre-treatment, from which material to be treated is output, through the pipe 3, in a suitable shape for subsequent processing.

Said pipe 3 feeds the pyrolysis section 4 of the process. Section 4 includes two reactors: a first reactor 28, fed by pipe 3. From this reactor 28 pipe 5, from which carbon black is output, as a by-product for subsequent sale, and two pipes 29, 30 feeding a second reactor 31, exit. The reactor 28 is a rotating oven, of the type typically used for pyrolysis, while reactor 31 is a plug flow reactor. From reactor 31 flows 6, 8 and 32 are output. Of course, if the operations depicted in fig. 4 refer to a process like the one in fig. 1, there will be both flow 6 and flow 8 and flow 32; if they refer to a process like the one in fig. 2, reactor 31 outputs only flow 6 and flow 32; and if they refer to a process like the one in fig. 3, reactor 31 outputs only flow 8 and flow 32.

Examining what happens in the process, we start dealing with the embodiment of fig. 1.

Normally, pre-treatment unit 2 is a grinder, that reduces tyres into powder or anyway into small-sized pieces, so to make pyrolysis easier through the increase of surface area. When the powder enters section

4, it undergoes pyrolysis, at high temperature, higher than 300°C, in the absence of air, so to prevent combustion phenomena. High temperature triggers cracking reactions of the polymers that make up tyres, so that mainly aliphatic long chain hydrocarbons are formed, of the fractions suitable for preparing lubricant oils or fuels, such as diesel oil. On the other side, one part of the polymers is dehydrogenated, then giving origin to carbon black. As it was observed, carbon black is discharged from reactor in 5 as a valuable secondary product, while pyrolysis oil is carried on to the following phases, split into two flows. Essentially, pyrolysis oil output from the pyrolysis section 4 is split into one flow 6 feeding a hydrorefining reactor 7 and a flow 8 feeding a regeneration plant for waste oils including a final hydrorefining step. Said regeneration plant for waste oils includes a fractional distillation step, the tail of which is comprised of bitumen and the heads of which are subjected to a hydrorefining step. Flow 6 goes directly to feed a hydrorefining reactor 7 where such refining takes place in conditions that are normal for the production of fuel and lubricants. The other part, where most of the impurities derived from pyrolysis concentrate, impurities that until today, in fact, have made the pyrolysis process of ELT less interesting that one could suppose, is output from the reactor in flow 8 and feeds a flash distillation column 12, where it is subjected to distillation, at a temperature slightly higher than the boiling point of water, for example 140°C, and this results in removal of water, that leaves through vent 13. One reason for splitting the pyrolysis oil into two flows 6 and 8 is to send fractions compliant with L.D. 152/06, Title IV (an Italian law), in flow 6 and the others in flow 8. Pipe 14 carries the material to be further treated to a centrifugal separator 15, where the removal of heavier impurities takes place, impurities that later can be further treated with processes such as those developed by Itelyum Regeneration in IT102020000001357, to obtain quality bitumens, for more valuable uses. The product to be treated exits pipe 16 and is fed to column 17 for fractional distillation, which separates different fractions in 19, 20, 21 and 22, while the bitumen, that represents the distillation tail, is discharged in 18.

Fractions 19, 20, 21, 22 are fed into a reactor 23, where hydrorefining occurs and bases for lubricant exit through pipes 24, 25, 26, 27. Generally, these bases have a higher naphthene than paraffins content.

According to a variation of this process, it is possible to feed flows 19, 20, 21, 22, instead of a reactor 23, dedicated to them, directly to reactor 7, where also pipe 6 merges, so mixing the end products, in case these were economically more advantageous.

A process like that described in fig. 1 requires a quite large installation, but it has the advantage of pushing far the purification of product fractions, increasing their enhancement, also optimising consumption, since a part of the material, already of a quality suitable to be placed on the market, is directly hydrorefined in reactor 7.

The process according to fig. 2 is simplified in comparison with that of fig. 1. In practice, after the pyrolysis step in reactor 4, only one flow 6, containing pyrolysis oil, is sent to the hydrorefining reactor 7 and flows of fuels and bases for lubricants 9, 10, 11 are obtained. Generally, the bases obtained have a naphthene content that is higher than in paraffins.

A process like this leads to a not-very-clean product, although it implies lower installation and working costs. It is advantageous, in the case products with a very high value added are not desired.

The process according to fig. 3 also involves an installation that is simpler than that of fig. 1. Essentially, the pyrolysis oil output from the pyrolysis section 4 feeds a regeneration plant for waste oils including a final hydrorefining step. So, after the pyrolysis step and the discharge of carbon black in 5, the pyrolysis oil is sent, through a single flow 8, to flash distillation column 12, where water is separated out from vent 13 and oil exits through pipe 14, to feed centrifugal separator 15. From the centrifugal separator 15, the material to be treated is output through pipe 16 and feeds fractional distillation column 17, from which bitumen as a tail, from discharge pipe 18, and products in flows 19, 20, 21, 22 exit, which undergo a hydrorefining treatment in reactor 23, from which fuels (normally of the diesel oil blend) and bases for lubricants in flows 24, 25, 26, 27 are output. Generally, these bases have a higher naphthene than paraffins content. This process provides the best quality products and not too high installation costs, still with a reduction of energy efficiency when compared to the embodiment of fig. 1, since it requires that all the oil undergoes the whole regeneration process of waste oils.

Concerning embodiments according to fig. 4, rotating oven 28 allows a traditional pyrolysis reaction, producing carbon black, which is discharged in 5 and a gas that exits through pipe 29 and a pyrolysis oil, that exits through pipe 30. Plug flow reactor 31 receives both gas and pyrolysis oil and performs a second operation that can be considered pyrolysis or cracking, working at a temperature between 350 and 600°C. Integration of a plug flow reactor allows to obtain, in addition to pyrolysis oil to be fed to the hydrorefining unit and/or to the regeneration plant for waste oils, also gaseous hydrogen that can be directly used for the hydrorefining step, with a clear saving of material, or it can be sent for sale as a valuable product or one part for one purpose and the other part for the other. Hydrogen production has never been obtained in any tyre pyrolysis plants and it is made possible by the sequential combination of rotating oven and plug flow reactor. Particularly advantageous results are obtained if the rotating oven is integrated upstream of the plug flow reactor, but hydrogen can be obtained in both ways.

A key point of the process, anyway, is the hydrorefining of pyrolysis oil, a single treatment that completely and effectively removes particulate from the pyrolysis oil of tyres, making the recovery of these materials, today difficult to dispose of, completely recyclable in materials that can be used for other industrial purposes. In this way, the present invention allows to compensate the present consumption of petroleum products, enhancing wastes that in Italy today are still widely exported, additionally eliminating almost all the exhausts to be disposed of in the disposal of end-of-life tyres.

Anyway, it is understood that the invention should not be considered limited to the particular arrangement described above, which comprises only one exemplary embodiment, but that different variations are possible, all within the experience of a skilled technician, without therefore leaving the scope of protection of the invention itself, as defined by the following claims.

### LIST OF REFERENCE NUMBERS

1 ELT Feed
2 Pre-treatment unit
3 Pipe
4 Pyrolysis section
5 Pipe
6 Pipe
7 Hydrorefining reactor
8 Pipe
9 Pipe
10 Pipe
11 Pipe
12 Flash Distillation column
13 Pipe
14 Pipe
15 Centrifugal separator
16 Pipe
17 Fractional distillation column
18 Pipe
19 Pipe
20 Pipe
21 Pipe
22 Pipe
23 Hydrorefining reactor
24 Pipe
25 Pipe
26 Pipe
27 Pipe
28 Rotating oven
29 Pipe
30 Pipe
31 Plug flow reactor

## Claims

1. Process for the disposal of end-of-life tyres (ELT), including a pyrolysis step of the tyres themselves, wherein pyrolysis oil is obtained, wherein the pyrolysis oil is subjected, in a subsequent processing step, to a hydrorefining step, **characterised in that** the pyrolysis step is carried out in a first step, in a rotating oven (28), producing carbon black, a gas and a pyrolysis oil and in a second step, in a plug flow reactor (31) which receives both gas and pyrolysis oil and performs a second operation that can be considered pyrolysis or cracking, working at a temperature between 350 and 600°C and **in that** the pyrolysis oil output from the pyrolysis section (4) feeds a regeneration plant for waste oils including a final hydrorefining step.

2. Process as in 1), **characterised in that** the pyrolysis oil output from the pyrolysis section (4) is split into a flow (6) feeding a hydrorefining reactor (7) and a flow (8) feeding the regeneration plant for waste oils including a final hydrorefining step.

3. Process as in 2), **characterised in that** said regeneration plant for waste oils includes a fractional distillation step, the tail of which is comprised of bitumen and the heads of which are subjected to a hydrorefining step.

## Patentansprüche

1. Verfahren für die Entsorgung von das Ende der Lebensdauer erreichten Reifen (ELT), einschließend einen Pyrolyseschritt der Reifen selbst, wobei Pyrolyseöl erhalten wird, wobei das Pyrolyseöl, in einem anschließenden Verarbeitungsschritt, einem Hydroraffinierungsschritt unterzogen wird, **dadurch gekennzeichnet, dass** der Pyrolyseschritt durchgeführt wird in einem ersten Schritt in einem Drehofen (28), erzeugend Kohlenstoffruß, ein Gas und ein Pyrolyseöl, und in einem zweiten Schritt, in einem Pfropfen-Strömungsreaktor (31), der sowohl Gas als auch Pyrolyseöl aufnimmt und eine zweite Betriebsweise durchführt, die als Pyrolyse oder Cracking betrachtet werden kann, arbeitend bei einer Temperatur zwischen 350 und 600 °C, und dass die Pyrolyseölausgabe aus dem Pyrolyseabschnitt (4) eine Regenerationsanlage für Abfallöle, einschließend einen abschließenden Hydroraffinierungsschritt, füttert.

2. Verfahren nach Anspruch 1, **dadurch gekennzeichnet, dass** die Pyrolyseölausgabe aus dem Pyrolyseabschnitt (4) in einen Fluss (6), der einen Hydroraffinierungsreaktor (7) füttert, und einen Fluss (8), der die Regenerationsanlage für Abfallöle, einschließend einen abschließenden Hydroraffinierungsschritt, füttert, aufgeteilt wird.

3. Verfahren nach Anspruch 2, **dadurch gekennzeichnet, dass** besagte Regenerationsanlage für Abfallöle einen fraktionierenden Destillationsschritt einschließt, dessen Rückende von Bitumen umfasst ist und dessen Kopfende einem Hydroraffinierungsschritt unterzogen wird.

## Revendications

1. Procédé de mise au rebut de pneus en fin de vie (ELT), comportant une étape de pyrolyse des pneus euxmêmes, dans lequel de l'huile de pyrolyse est obtenue, dans lequel l'huile de pyrolyse est soumise, lors d'une étape de traitement ultérieure, à une étape d'hydroraffinage, **caractérisé en ce que** l'étape de pyrolyse est réalisée lors d'une première étape, dans un four rotatif (28), en produisant du noir de carbone, un gaz et de l'huile de pyrolyse, et lors d'une seconde étape, dans un réacteur à écoulement piston (31) qui reçoit à la fois du gaz et de l'huile de pyrolyse et effectue une seconde opération pouvant être considérée comme étant une pyrolyse ou un craquage, agissant à une température comprise entre 350 et 600 °C, et **en ce que** la sortie d'huile de pyrolyse provenant de la section de pyrolyse (4) alimente une installation de régénération d'huiles usagées comportant une étape finale d'hydroraffinage.

2. Procédé comme dans 1, **caractérisé en ce que** la sortie d'huile de pyrolyse provenant de la section de pyrolyse (4) est divisée en un flux (6) alimentant un réacteur d'hydroraffinage (7) et en un flux (8) alimentant l'installation de régénération d'huiles usagées comportant une étape finale d'hydroraffinage.

3. Procédé comme dans 2, **caractérisé en ce que** ladite installation de régénération d'huiles usagées comporte une étape de distillation fractionnée dont la queue comprend du bitume et dont les têtes sont soumises à une étape d'hydroraffinage.
